# EUROPEAN PATENT APPLICATION

(11) **EP 2 293 263 A2**
(43) Date of publication of application: **09.03.2011**
(21) Application number: 10011991.6
(22) Date of filing: 29.03.2002
(51) Int. Cl.: G07F 7/00

(54) **On-line and/or off-line card transaction system and method**

(30) Priority: 09.02.2002 KR 20020007685; 29.03.2001 KR 20010016434
(62) Divisional of application: 02714586.1
(71) Applicant: Ebestcard Ltd, 137-888 Seoul (KR); Hong, Yong-Nam, 138-050 Seoul (KR)
(72) Inventor: The designation of the inventor has not yet been filed
(74) Representative: Bucks, Teresa Anne

(57) **Abstract**

The present invention relates to a system and method for allowing a user to have card transactions on-line and/or off-line with a non-rechargeable electronic money (e-money) card. The system and method -enable the maintenance of data coherency between a server and a terminal, each of the server and the terminal including a fixed table, in which a memory area is divided into blocks, flag information corresponding to individual card numbers is sequentially stored in each block according to the card numbers, and version information indicating the data update history of each block is stored;-and a variable table, which stores data regarding card numbers, for which flag information is charged, when there are changes in data regarding flag information stored in the fixed table, and version-information indicating the data update history of the variable table.

## Description

### Technical Field

The present invention relates to a system and method for allowing a user to have card transactions on-line and/or off-line with a non-rechargeable electronic money (e-money) card.

### Background Art

With development of industry, a system for settling payment for a bus fare with an electronic purse or an electronic money such as a transport card instead of cash has been established. -When all of the money, with which a transport card or other prepayed e-money card is charged, is spent, the transport card or other prepayed e-money card must be recharged with the desired amount of money at a recharging station with payment in cash or by credit card. In using a rechargeable card such as this, it is burdensome for a user to repeatedly visit a recharging station to recharge the card with a certain amount of money before use of the card.

In addition, as Internet is rapidly and widely spread, the types and scales of electronic commerce such as a shopping mall, B2B, and B2C in the cyber world have been increased, and cyber money or e-money is used for payment instead of remittance in cash or a credit card. However, use of cyber money or e-money is inactive and is not used off-line at all.

### Disclosure of the Invention

It is a first object of the present invention to provide a card transaction system and method for processing card transactions on-line and/or off-line.

It is a second object of the present invention to provide a card terminal for processing card transactions off-line according to flag information stored in a database and a method of determining whether a card can be used.

To achieve the first object of the present invention, there is provided a card transaction system including a card issuing unit which allocates a unique card number to each card and sets a card account corresponding to the card number to issue a card; a card adjustment unit which receives transaction details corresponding to the card and adjusts the card account corresponding to the card according to the transaction details; a flag generator which generates a flag, which indicates whether the card can be used, according to the balance of the card account, on the basis of an off-line reference amount set for off-line transactions and an on-line reference amount set for on-line transactions; and a card information transmitter which transmits the flag corresponding to the card.

Preferably, the off line reference amount (i.e., a negative amount) is set based on a minimum amount of money, which is necessary for an off-line transaction using the card, the on-line reference amount (i.e., a yellow- amount) is set based on a minimum amount of money, which needs to be left as the balance of the card account for an off-line transaction, and the balance of the card account is not less than the on-line reference amount after an on-line card transaction is made.

The card transaction system may further includes an on-line processor which inquires the card account to check the balance of the card account when an on-line transaction using the card is requested, rejects the request if a charge for the on-line transaction is larger than the result of subtracting the on-line reference amount from the balance of the card account, and otherwise, approves the on-line transaction by subtracting the charge for the on-line transaction from the balance of the card account. In addition, it is preferable that when the balance of the card account is less than the on-line reference amount and is larger than the off-line reference amount that is less than the on-line reference amount, the flag generator automatically attempts to transfer money from an account of a user of the card to the card account so that the balance of the card account is at least the on-line reference amount.

Preferably, the card transaction system further includes a fixed data storage unit in which a memory area is divided into blocks, and flag information corresponding to individual card numbers is sequentially stored in each block according to the card numbers; and a variable data storage unit which temporarily stores changed data when there are changes in data regarding flag information stored in the fixed table. Data stored in the fixed data storage unit is updated in units of blocks based on data stored in the variable data storage unit.

In one embodiment, there is also provided a method of processing a card transaction. The method includes the steps of (a) checking the balance of a card account, which is used for settling payment for transactions using a card; (b) generating a positive flag indicating that the card can be used when the balance of the card account is at least a negative amount which is set to a predetermined amount of money; (c) when the balance of the card account is larger than the negative amount and is less than a yellow amount, which is set to be larger than the negative amount, attempting to transfer money from an account of an owner of the card to the card account so that the balance of the card account is at least the yellow amount; and (d) when receiving information about the details of a card transaction, adjusting the charge for the card transaction from the balance of the card account and then repeating the steps starting from step (b) to update flag information corresponding to the card.

In another embodiment, there is provided a method of allowing on- and off-line transactions to be made using a card. The method includes inquiring a card account, which is used for settling payment for transactions using the card, through a communication network to check the balance of the card account when there is a request to use the card on-line; and rejecting the requested on-line card transaction when a charge for the on-line card transaction is larger than the result of subtracting a certain amount of money, which is set for an off-line transaction, from the balance of the card account, and when the charge is not larger than the result of the subtraction, approving the requested on-line card transaction by subtracting the charge from the balance of the card account. Preferably, the method further includes generating a positive flag, which indicates that an off line transaction is possible, when the balance of the card account is larger than a certain amount of money, which is set to be less than the certain amount of money set for an off-line transaction.

To achieve the second object of the present invention, there is provided a method of determining whether a card can be used. The method includes providing a fixed table, in which a memory area is divided into blocks, and flag information corresponding to individual card numbers is stored, and a variable table, which stores data regarding card numbers, for which flag information is changed, when there are changes in data regarding flag information stored in the fixed table; when there is a request to use a card, reading a card number from the card; checking whether the variable table includes data regarding the card number; if the variable table includes data regarding the card number, determining whether the card can be used according to flag information, which is stored in the variable table corresponding to the card number, and if the variable table does not include data regarding the card number, checking data in the fixed table; and reading flag information corresponding to the card number from- the fixed table and determining whether the card can be used according to the read flag information.

There is also provided a card terminal including a fixed table database which stores flag information, which indicates whether each card can be used, corresponding to each card number; a variable table database which stores data regarding card numbers, for which flag information is changed, when there are changes in data regarding flag information stored in the fixed table database; a card reader which reads a card number from a given card when there is a request to use the card; and a card controller which checks whether the variable table database includes data regarding the card number of a given card, determining whether the card can be used according to flag information in the variable table database when the variable table database includes the data, and checking data in the fixed table database to read flag information corresponding to the card number from the fixed table database to determine whether the card can be used according to the read flag information when the variable table database does not include the data regarding the card number.

Preferably, the fixed table database of which a memory area is divided into blocks further stores version information indicating data update history of each of blocks; the variable table database further stores version information indicating data update history thereof; and when the fixed and variable table databases are updated with data stored in a server, the version information stored in the fixed and variable table databases is compared with version information stored in the sever, and only data, for which the server and the card terminal have different version information, is updated. Preferably, the flag information includes a positive flag indicating that an off-line transaction using the card corresponding to the card number can be made.

### Brief Description of the-Drawings

FIG. 1 is a schematic block diagram of a non-rechargeable electronic money (e-money) system according to the present invention.
FIG. 2 is a flowchart of a procedure for applying for a cyber account in a method of operating a non-rechargeable e-money system according to the present invention.
FIG. 3 is a flowchart of a procedure for transferring money to a cyber account in a method of operating a non-rechargeable e-money system according to the present invention.
FIG. 4 is a flowchart of a procedure for managing client database- (DB) in a method of operating a non-rechargeable e-money system according to the present invention.
FIG. 5 is a flowchart of a procedure for downloading a DB in a method of operating a non-rechargeable e-money system according to the present invention.
FIG. 6 is a flowchart of a procedure for settling an account in a method of operating a non-rechargeable e-money system according to the present invention.
FIGS. 7A and 7B are flowcharts of procedures for processing an on-line transaction and=an automated teller machine (ATM) transaction, respectively, in a method of operating a non-rechargeable e-money system according to the present invention.
FIG. 8 is a diagram showing a general outline of a card transaction system according to an embodiment of the present invention.
FIG. 9 is a block diagram of a card terminal according to an embodiment of the present invention.
FIGS. 10A through 10C are diagrams for explaining the types of data stored in databases.
FIGS. 11A and 11B are flowcharts for explaining a procedure in which a main server sets flag information about authority to use a card.
FIG. 12 is a flowchart of a method of updating data in a memory pack of a card terminal.
FIG. 13 is a flowchart of a procedure in which a card terminal approves the off-line use of a card.

### Best mode for carrying out the Invention

Hereinafter, preferred embodiments of the present invention will be described in detail with reference to the attached drawings.

A non-rechargeable electronic money (e-money) system: according to the present invention includes a client accessing a non-rechargeable card management server, a non-rechargeable card management server connected to banks or various traffic management organizations, and a database storing information about members and e-money. In an integrated on- and off-line operating method for a non-rechargeable e-money system according to the present invention, when a client opens a cyber account on a network using mobile communication equipment such as a portable phone or Internet communication and deposits a certain amount of money to the account using Internet banking, phone banking, or mobile communication equipment, the client is allowed to pay for transport fares such as bus and subway fares, charges for on-line electronic commerce, or charges for using off-line member stores through a point-of-sale terminal within the limit of money deposited to the account.

According to such non-rechargeable e-money system and integrated on-/off-line operating method of the present invention, once a client opens a cyber account on a network using the Internet or mobile communication equipment such as a portable phone and deposits a certain amount of money to the account using Internet banking or phone banking, the client can pay for transport fares such as bus and subway fares, charges for on-line electronic commerce, or charges for using off-line member stores with e-money within the limit of money deposited to the account, so the client can avoid annoyance of repeatedly visiting a charging station and charging a bus transport card or a prepayed e-money card.

In addition, by employing a deposition method and a two step client DB management method using a positive list and a yellow list, existing e-money such as cyber money which is not used off-line can be used on-line and off-line.

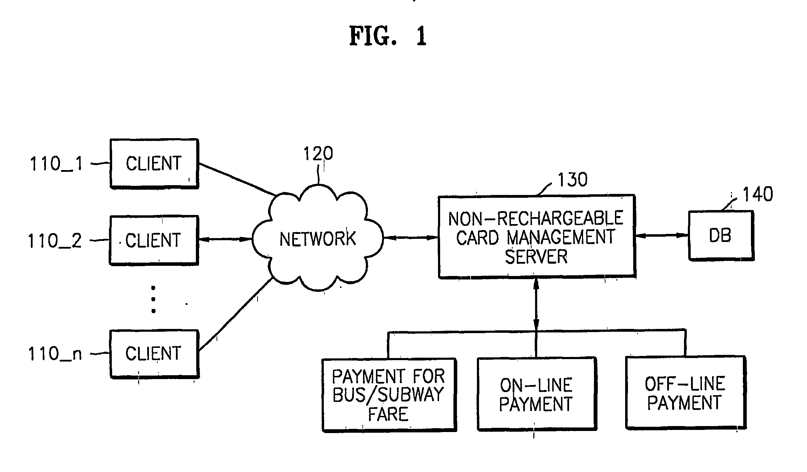

FIG. 1 is a schematic block diagram of a non-rechargeable e-money system according to the present invention.

The non-rechargeable e-money system according to the present invention includes clients 110_1 through 110_n who access a non-rechargeable card management server as members through cyber accounts associated with their bank accounts; a non-rechargeable card management server 130 which processes information transmitted from each of the clients 110_1 through 110_n and transmits data to and_ receives data from banks and various traffic management organizations; a network 120 which connects each of the clients 110_1 through 110_n to the card management server 130; and a database (DB) 140 for storing personal information and e-money information of each member, which are processed by the card management server 130.

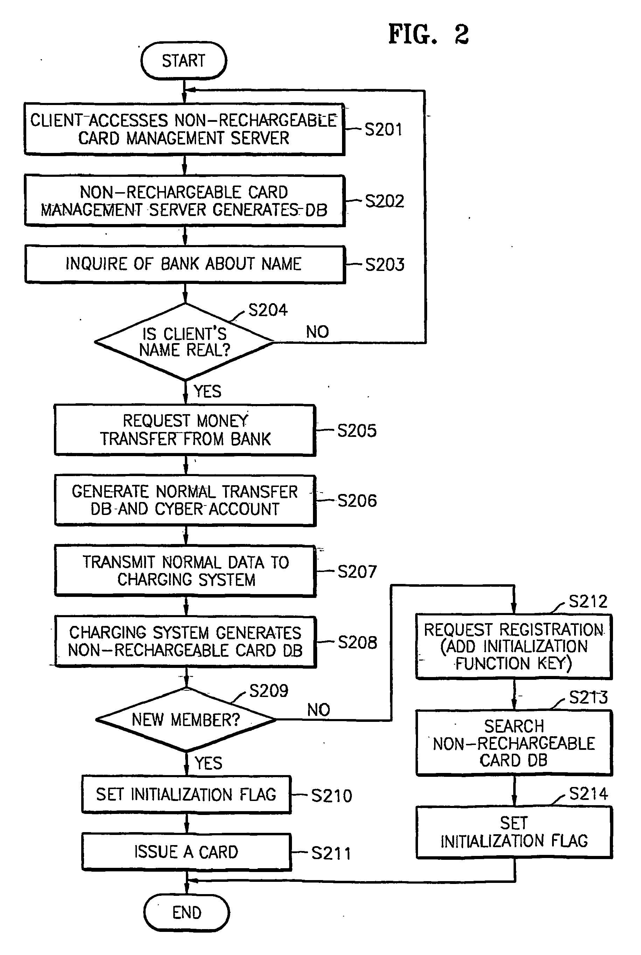

FIG. 2 is a flowchart of a procedure for applying for a cyber account in a method of operating a non-rechargeable e-money system according to the present invention.

If a client accesses a non-rechargeable card management server through a network and applies for a cyber account in step S201, the non-rechargeable card management server generates a DB in step S202, inquires of a bank about the client's name using the client's identification number and account number in step S203, and determines whether the client's name is real in step S204.

If the client's name is determined as real,the non-rechargeable card management server requests the bank to transfer the agreed amount of money in step S205 and generates a DB for a normal transfer in step S206. When the non-rechargeable card management server transmits normal data to a charging system in step S207, the charging system generates a non-rechargeable card DB in step S208. It is determined whether the client is a new member in step 209. If it is determined that the client is a new member, an initialization flag is set in step S210, and a card is issued in step S211.

If it is determined that the client is an existing member having a card, a terminal is requested to perform registration for adding an initialization function key in step 212. Thereafter, the non-rechargeable card DB is searched for a corresponding card in step S213, and an initialization flag is set for the searched card in step S214.

Here, for example, an initialization flag may be set to 0 indicating a normal card, 1 indicating a new card for a student, 2 indicating an initialized card for a student, 3 indicating a card for a college student, 4 indicating a preliminary card, 5 indicating a non-rechargeable card for a student, and 6 indicating a non-rechargeable card for an adult.

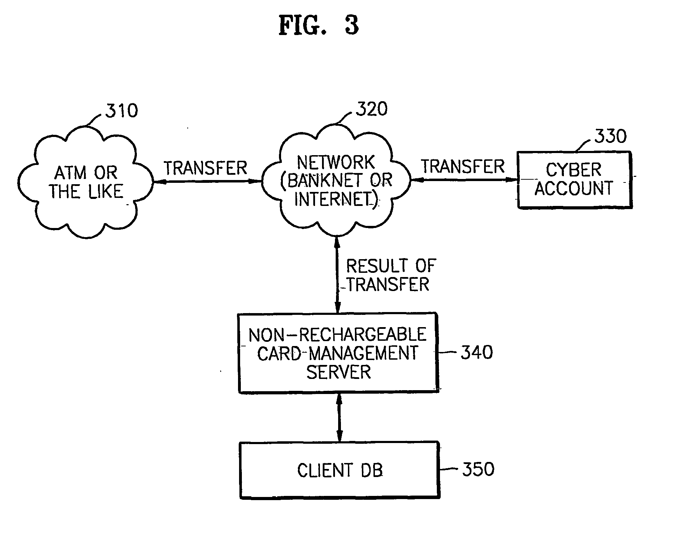

FIG. 3 is a flowchart of a procedure for transferring money to a cyber account in a method of operating a non-rechargeable e-money system according to the present invention.

If a client, who has applied for a non-rechargeable e-money card and had permission, transfers money to a cyber account 330 of an e-money system using a bank window, an automated teller machine (ATM), internet banking or phone banking and mobile communication equipment, another cyber account or the like 310 via a network 320 such as a banknet or the Internet, the non-rechargeable card management server 340 receives the result of transfer and updates the amount of money stored in a client DB 350.

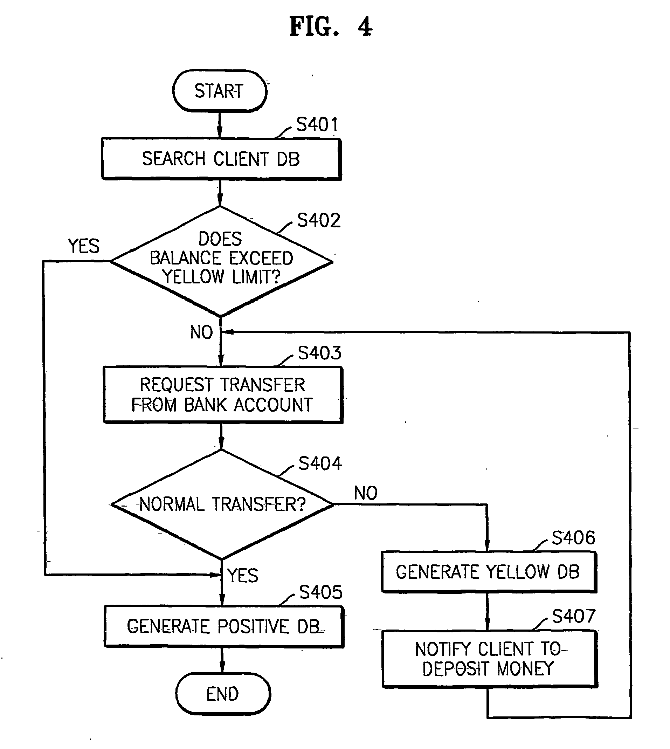

FIG. 4 is a flowchart of a procedure for managing a client DB in a method of operating a non-rechargeable e-money system according to the present invention. While e-money is used in a positive state, a non-rechargeable card management server searches the client DB in step S401 and-determines whether the client's balance exceeds a yellow limit in step S402. If it is determined that the balance is less than the yellow limit, the non-rechargeable card management server automatically requests money transfer from the client's bank account to a predetermined cyber account in step S403.

If the transfer is normally performed according to the request in step S404, the positive state is restored from the yellow state and a positive DB is generated for the client in step S405 so that the client can use e-money without a separate charging action.

If money is not normally transferred from the client's bank account, the client is classified into a yellow state in step 406, and a warning message informing that the client is put on the yellow list is sent to the client using e-mail or mobile communication in order to notify the client to deposit money to the client's bank account so that the predetermined cyber account can be maintained in the positive state in step S407.

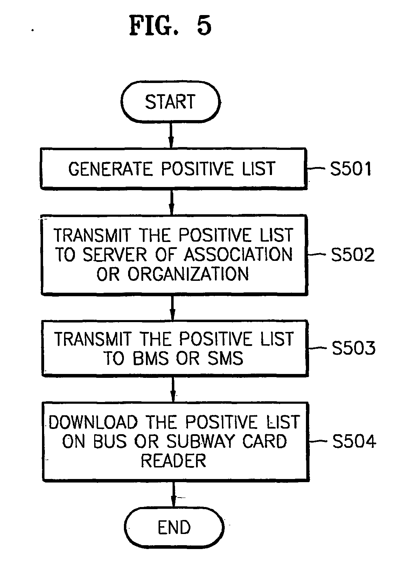

FIG. 5 is a flowchart of a procedure for downloading a positive list on a terminal for charging transport fares in a method of operating a non-rechargeable e-money system according to the present invention. If a positive list is generated in step S501, it is transmitted to a main server of a bus association or a transport organization in step S502. Thereafter, the positive list is transmitted to a bus management system (BMS) of a bus company or a subway management system (SMS) of a subway corporation in step S503 and is then downloaded on a card reader installed at a gate of a bus or subway station in the form of bit map data in step S504. Here, the downloaded positive list may be updated every day by setting the term of validity to a day.

The following description concerns a method of compressing, storing, and managing the positive list in the transport related terminal in a method of operating a non-rechargeable e-money system according to the present invention.

In case of an existing deferred payment type transport card system, a minimum of 5 bytes is required to store black list data for a single card in a terminal. Accordingly, a capacity of about 10 Mbytes is required to store back list data for 2 million cards. At present, a transport card terminal has a memory capacity of 5 Mbytes, so it can store black list data for 1 million cards.

In a method of operating a non-rechargeable e-money system according to the present invention, a method of storing a positive list in a transport card terminal is different from a method of storing a black list of deferred payment transport cards. First, unique serial numbers (Alias numbers or e-transport card numbers) starting from 1 are allocated to e-money cards, and each unique serial number is allocated to only one e-money card.

The normal or abnormal state of a deferred payment transport card is determined based on a card number itself in a method using a black list. However, in the present invention, the memory area of a transport card terminal is composed in the form of a bit map, and each e-money card is determined as having a positive flag according to the logic state of a memory bit corresponding to the E-transport card number allocated to the e-money card.

Accordingly, in a case where a transport card terminal has a memory capacity of 5 Mbytes, data (flags) for about 43 million e-money cards can be stored when the positive data for each e-money card has one bit, and positive data for about 21.5 million e-money cards can be stored when the positive data for each e-money card has two bits. In addition, when searching a positive list, the Alias number of a relevant e-money card is read; data stored at a memory position allocated to the Alias number is read; and it is determined whether the data indicates a positive flag, so the search can be performed very fast.

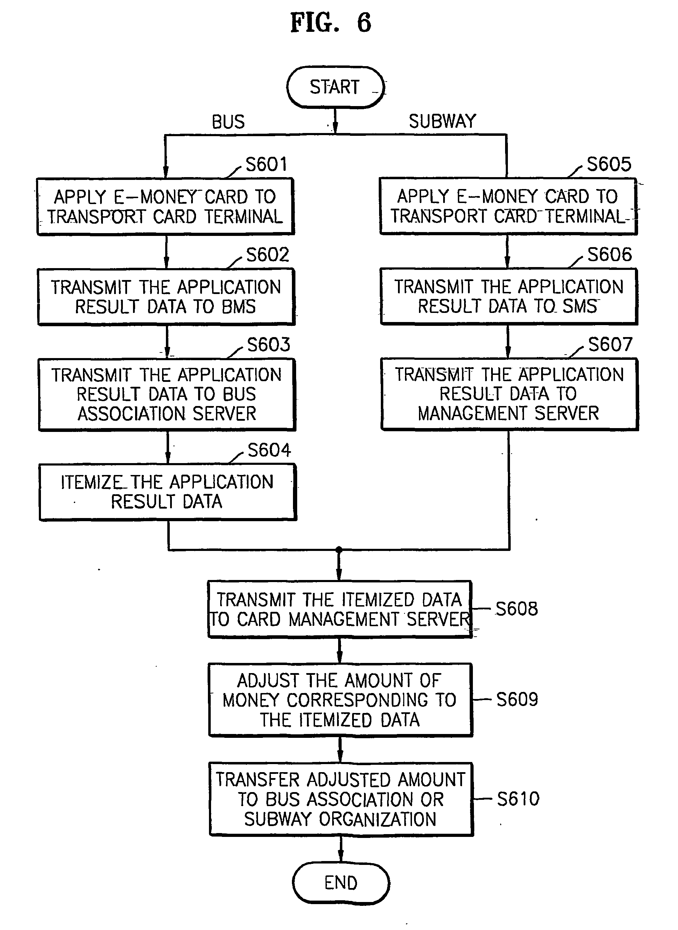

FIG. 6 is a flowchart of a procedure for settling an account in a method of operating a non-rechargeable e-money system according to the present invention.

When a client applies an e-money card to a transport card terminal installed at a bus in step S601, the application result data is transmitted to a BMS of a transportation company in step S602 and is then transmitted to a bus association server in step S603. Thereafter, the application result data is itemized in step S604. When a client applies an e-money card to a transport card terminal installed at the gate of a subway station in step S605, the application result data is transmitted to an SMS installed at the subway station in step S606 and is then transmitted to a management server of a transport organization in step S607 to itemize the application result data. Thereafter, the itemized data is collected at a non-rechargeable card management server in step 608. The amount of money corresponding to the itemized data is adjusted in step S609, and the adjusted amount is transferred to a relevant bus association or subway organization in step S610.

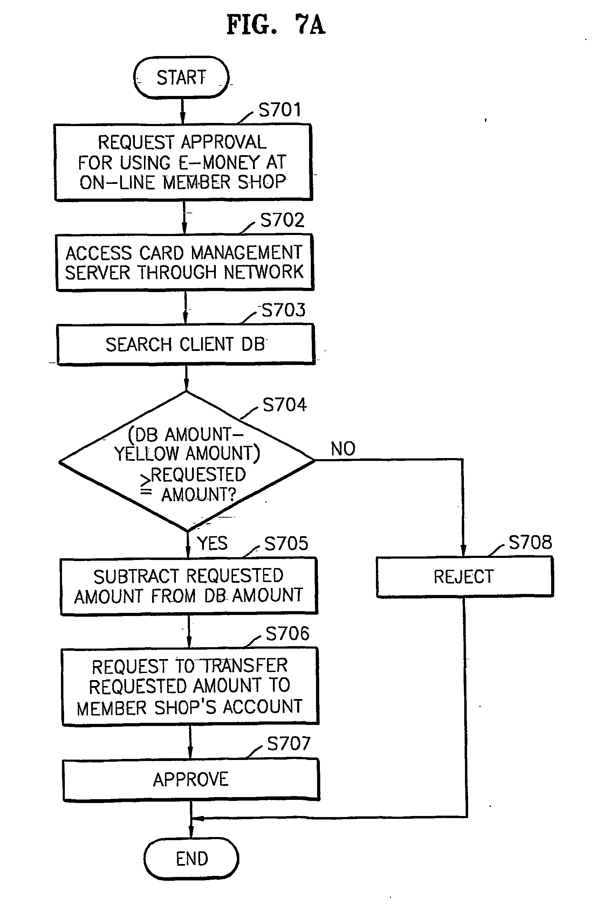

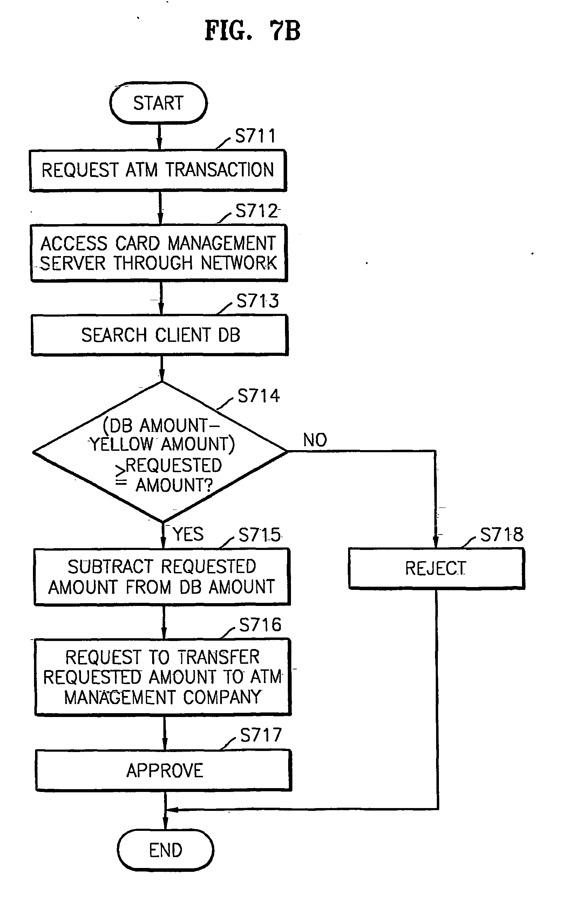

FIGS. 7A and 7B are flowcharts of procedures for processing an on-line transaction and an ATM transaction, respectively, in a method of operating a non-rechargeable e-money system according to the present invention.

In case of an on-line transaction, when a client requests an approval for using a certain amount of e-money to settle payment at an on-line shopping mall, transfer money by e-mail, or settle payment at an on-line member shop in step S701, a client terminal receiving the request is accessed to a non-rechargeable card management server through an on-line network in step S702 and a client DR is searched in step S703. The client DB stores data (DB amount) regarding the balance of a cyber account for the client's e-money card, i.e., the amount of money the client can withdraw from the cyber account. If the balance between the DB amount and a yellow amount is at least the amount of money requested by the client in step S704, the requested amount is subtracted from the DB amount in the cyber account in step S705. The requested amount is requested to be transferred to a relevant shopping mall's account, the other part's virtual account or a member shop's account in step S706, and the request is approved in step S707. If the balance between the DB amount and the yellow amount is less than the amount of money requested by the client, the request is rejected in step S708.

If a client requests to withdraw cash or transfer money to a third party using a bank window or an ATM in step S711, a terminal receiving the request is accessed to a non-rechargeable card management server through a network in step S712, and a client DB is searched in step S713. If the balance between the DB amount and a yellow amount is at least the amount of money requested by the client in step S714, the requested amount is subtracted from the DB amount in the cyber account in step S715. The requested amount is requested to be transferred to a relevant bank or an ATM management company in step S716, and the request is approved in step S717. If the balance between the DB amount and the yellow amount is less than the amount of money requested by the client, the request is rejected in step S718.

The following description concerns a method of processing real-time on-line transactions and batch-mode off-line transactions together in a method of operating a non-rechargeable e-money system according to the present invention A non-rechargeable e-money system according to the present invention is designed such that the balance (or deposit) of a cyber account corresponding to an e-money card is maintained larger than the negative amount of money for off-line transactions, and the result of subtracting a requested amount of money from the balance of the account is maintained to be at least a yellow amount for on-line transactions. Accordingly, off-line transactions, which are not processed in real time but are processed in a batch mode, can be processed together with on-line e-commerce transactions, for which the balance of the cyber account is maintained above a predetermined amount of money and a transaction is requested and approved in real time.

In other words, in an off-line mode in which the details of transactions are preserved for a predetermined period of time and are then checked with the ledger of a host, the time difference between the time when a particular transaction occurs and the time when the host's ledge is checked may occur errors. However, according to the present invention, since the term of validity is set to a day, an updated positive list is downloaded on a terminal every day and the balance of a client's cyber account is always maintained to be at least a predetermined amount of money, thereby buffering errors which may occur due to the time difference.

Referring to FIGS. 7A and 7B, an on-line transaction method using a card which can be used on-line and offline is described.

In a case where there is a transaction request using a card in an on-line mode, such as a debit transaction or withdrawal through an ATM, account information necessary for settling payment for the on-line card transaction is inquired through a communication network to check the balance of an account related to the relevant card. If the amount of money requested for the on-line card transaction is larger than the result of subtracting a yellow amount from the balance of the account, the on-line card transaction is rejected. Otherwise, the on-line transaction is approved by subtracting the requested amount of money from the balance of the account. As described above, an on-line card transaction is approved only when a predetermined amount of money is left in the account related to the card so that an off-line card transaction can still take place. Accordingly, a problem due to the insufficient balance can be prevented, and on-line and off-line transactions can be made with a single card.

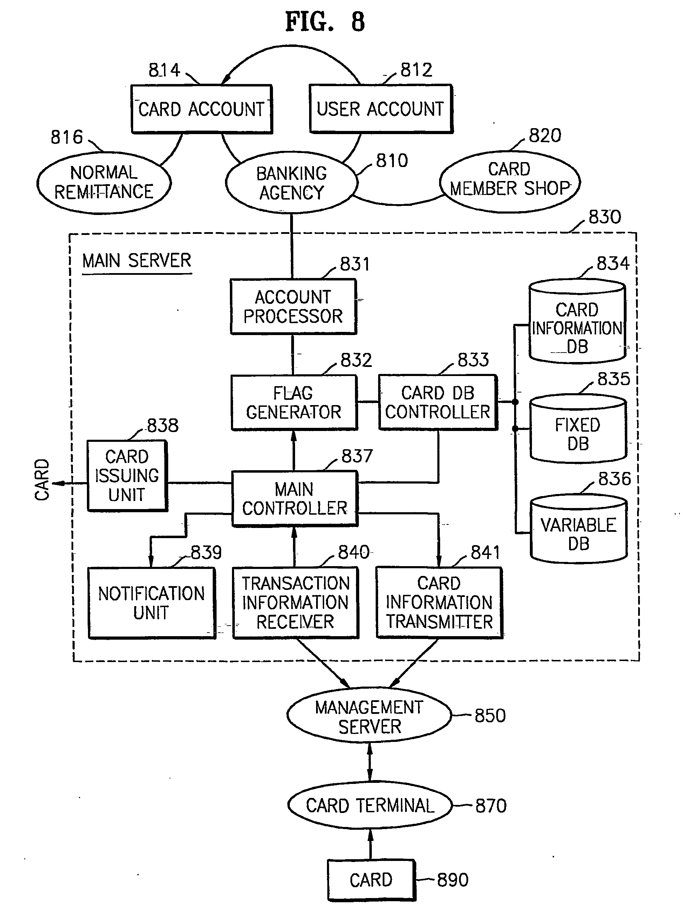

FIG. 8 is a diagram showing a general outline of a card transaction system according to an embodiment of the present invention. A main server 830 is connected to a banking agency 810 for settling payment for a card transaction and a management server 850 for managing transactions using a card 890 through a card terminal 870. The management server 850 functions as a mediator between the card terminal 870 and the main server 830. The management server 850 downloads data for card authentication to the card terminal 870 and receives data regarding card transaction details from the card terminal 870. The functions of the management server 850 may be integrated into the main server 830.

In order to allow a user to use the card 890 issued to him/her, the user's card account 814 is linked to the card 890. In addition, the user's card account 814 may be linked to a user account 812 of the card user for transferring money to the card account 814. The user may transfer money to the card account 814 using a normal remittance 816 such as wire transfer or credit transfer. When settling accounts according to the card transaction details, the money for each card transaction is automatically transferred to the account of a card member shop 820, in which the card transaction was made, or to a special account.

The main server 830 performs processes such as issuance of a card, generation of data related to approval of a card transaction, and settlement of accounts for a card transaction.

A card issuing unit 838 allocates a unique number to each card, sets the card account 814 corresponding to the card number, and issues the card. In addition, the card issuing unit 838 can set information about the user account 812 for transferring money to the card account 814.

The account processor 831 accesses the banking agency 810 to check the balance (or deposit) of the card account 814 or request to subtract the amount of money for card transaction from the balance. The banking agency 810 transmits data to or receives data from the account processor 831.

A flag generator 832 generates a use authority flag for each card according to the balance of the card account 814. The flag is generated based on an off-line reference amount (a negative amount), which is set for an off-line transaction, and an on-line reference amount (a yellow amount), which is set for an on-line transaction. The off-line reference amount is set based on a minimum amount of money, which is necessary for an off-line card transaction. The on-line reference amount is set based on a minimum amount of money, which needs to be left as the balance of the card account 814 for an off-line transaction, It is preferable that the balance of the card account 814, which remains after an on-line card transaction is made, is not less than the on-line reference amount.

The flags transmitted to the card terminal 870 for off-line transactions include positive flags for approving the off-line use of a card and negative flags for rejecting the off-line use of a card. A positive flag is generated when the balance of the card account 814 is at least the negative amount, and a negative flag is generated when the balance of the card account 814 is less than the negative amount. Positive or negative flag information corresponding to each card number is transmitted to the card terminal 870, and- the card terminal 870 determines approval or rejection for use of a card according to the flag information in case of an off-line transaction. Here, the negative amount is set to a minimum limit for an off-line card transaction. For example, when a card is made for the purpose of using the subway, the negative amount may be set to one or two subway fares.

The yellow amount is set for an on-line transaction in order to secure a reliable off-line transaction. In other words, the amount of money left in the card account 814 after the charge for an on-line card transaction is paid is maintained to be at least the yellow amount. That is, if the balance after the charge for an on-line card transaction is subtracted from the balance of the card account 814 is less than the yellow amount, the on-line card transaction is rejected. For offline card transactions, the main server usually performs settlement of accounts with a predetermined period (for example, 24 hours), so the yellow amount is set as a maximum amount of money or an average amount of money, which may be spent for an off-line transaction during that period. For example, if an e-money card is used off-line for taking subway, the yellow amount may be set to the amount of money, which can be spent per day, based on the average number of uses per day. Accordingly, on-line and off-line transactions can be reliably made using a single card.

When the balance of the card account 814 is less than the yellow amount and larger than the negative amount, the flag generator 832 automatically attempts to transfer money from the user account 812 to the card account 814 via the banking agency 810 such that the balance of the card account 812 is at least the yellow amount. If the transfer is successfully performed, the flag generator 832 generates a positive flag. Otherwise, the flag generator 832 generates a yellow flag. The yellow flag is for approving an on-line transaction taking into account an off-line transaction. Even if the yellow flag is generated, a flag for an off-line transaction is set to a positive flag, as described above, when the balance of the card account 814 is larger than the negative amount.

A notification unit 839 periodically or intermittently notifies a user of a card having a yellow flag to deposit money to the card account 814 so that a deficit can be made up. The user receiving the notification may deposit money to the user account 812 so that money can be automatically transferred to the card account 814 or may directly deposit at least a predetermined amount of money to the card account 814 through the normal remittance 816. Then, the flag generator 832, which checks the balance of the card account 814 on occasion or periodically, updates flag information for a relevant card.

The memory area of a fixed DB 835 is divided into blocks. Flag information corresponding to each card number is sequentially stored in a block according to the card numbers. When data regarding a card number and flag information stored in the table of the fixed DB 835 is changed, a variable DB 836 temporarily stores data regarding a changed card number and flag information.

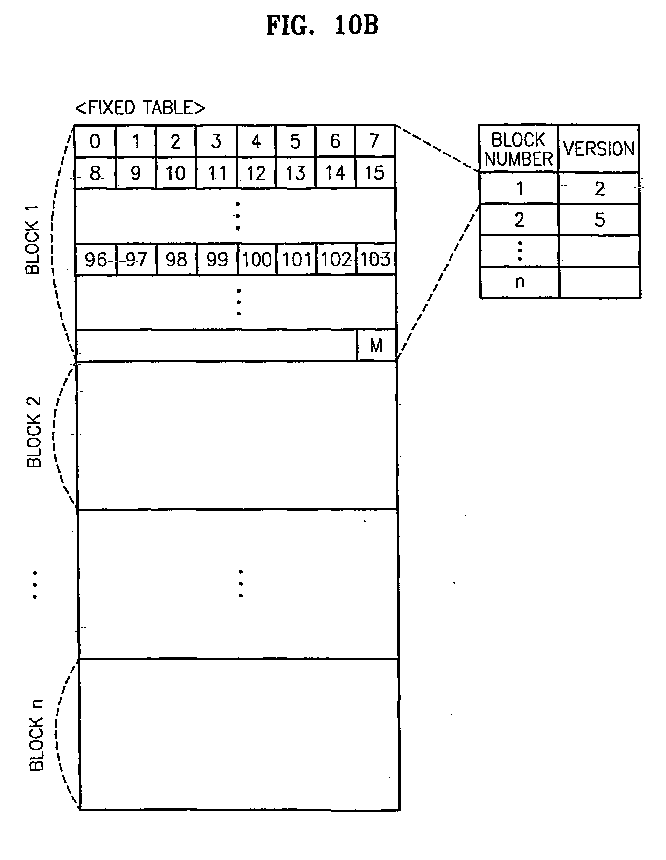

FIG. 10B is a diagram illustrating a method of storing data in a fixed table of the fixed DB 835. The memory area is divided into "n" blocks, each of which is allocated a block number. A version number for data update history is stored corresponding to each block number. For example, let's assume that (M+1) bits are assigned to each block. Then, a block 1 is assigned bits having addresses from 0 to M. In the first bit of the block 1 is stored flag information of a card corresponding to a card number "0000". If the flag information has a positive flag, a logic "1" is stored in a bit. If the flag information has a negative flag, a logic "0" is stored in a bit. Accordingly, flag information for a single card can be stored using only a single bit. If a card number is "0009", flag information for a corresponding card is stored in the second bit of the second byte of the block 1. Flag information can be found by finding a particular bit at a particular byte in a particular block using a card number as a memory address.

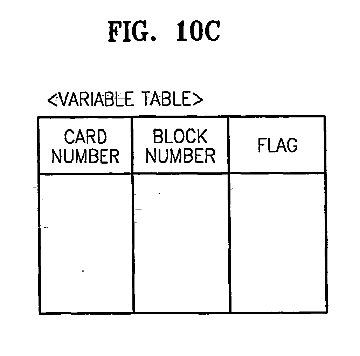

FIG. 10C is a diagram illustrating a method of storing data in a variable table of the variable DB 836. In the variable table are stored card numbers, block numbers for storing flag information corresponding to the card numbers, and changed flags corresponding to the card numbers. In the meantime, when flag information is restricted to two types: a positive flag and a negative flag, it is not necessary to store the changed flags because the changed flags can be obtained just by inverting the flag stored in the fixed table. In addition, the block numbers may not be stored because they can be calculated from the card numbers.

A card DB controller 833 stores a card number, for which flag information has been changed, in the variable DB 836 and updates data stored in the fixed DB 835 in units of blocks using data stored in the variable DB 836. The card DB controller 833 checks the card numbers stored in the variable DB 836. If is determined that among the card numbers stored in the variable DB 836, the number of card numbers belonging to a certain block in the fixed DB 835 is at least a predetermined value, the card DB controller-833 updates data stored in the block of the fixed DB 835 in a bundle and increases the version number of the block by 1. In the meantime, the card DB controller 833 deletes the card numbers used for update from the variable table and increases the version number of the variable table by 1.

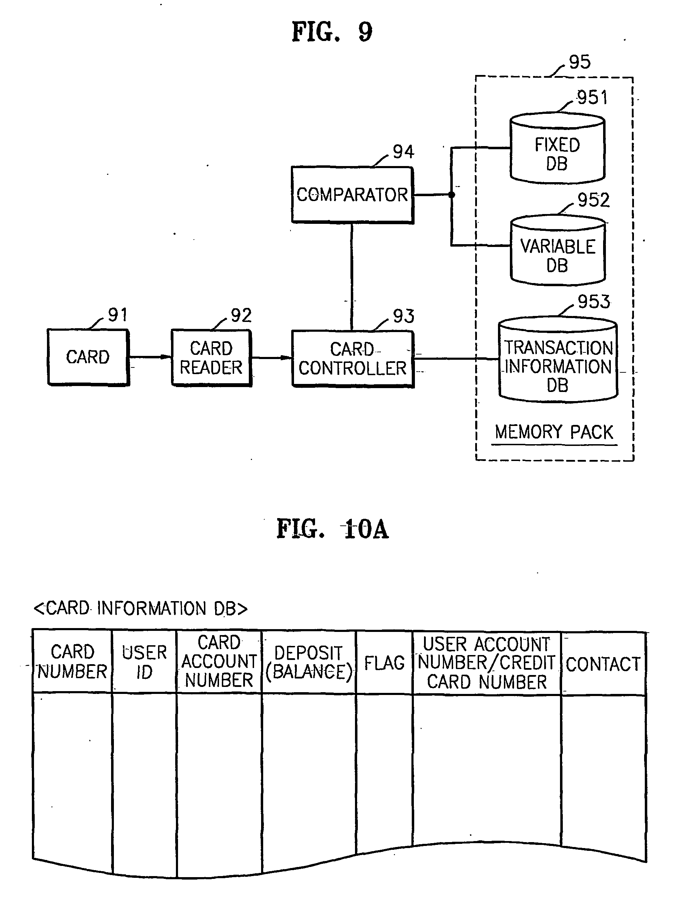

FIG. 10A is diagram showing the types of data stored in the card information DB 834 that stores entire information about cards and users. The card information DB 834 stores card numbers, user IDs such as user names, card account numbers, deposits (balances), flags, user account numbers or credit card numbers, users contacts, etc.

A main controller 837 issues a card, notifies a user of a yellow flag, controls data update through the card DB controller 833, and transmits card information. In addition, the main controller 837 receives card transaction details through a transaction information receiver 840 and makes a settlement according to the transaction details with respect to the card account 814 related to the relevant card. Meanwhile, as described with reference to FIGS. 7A and 7B, the main controller 837 can also process on-line card transactions. In other words, the main controller 837 transmits card information stored in the main server 830 to the card terminal 870 to allow a card transaction to be made off-line through the card terminal 870 or may be connected to the card terminal 870 on-line so that card transactions can be established. In this case, the main controller 837 performs the procedures described in FIGS. 7A and 7B and updates data of the variable DB 836 if flag information is changed as a result of performing the procedures.

The transaction information receiver 840- receives transaction details information occurring due to a card transaction from the management server 850 and transmits the transaction details information to the main controller 837. A card information transmitter 841 transmits flag information stored in the DBs 834, 835, and 836 to the management server 850. The management server 850 receives the fixed table and the variable table from the main server 830 and downloads them to a memory pack installed at the card terminal 870.

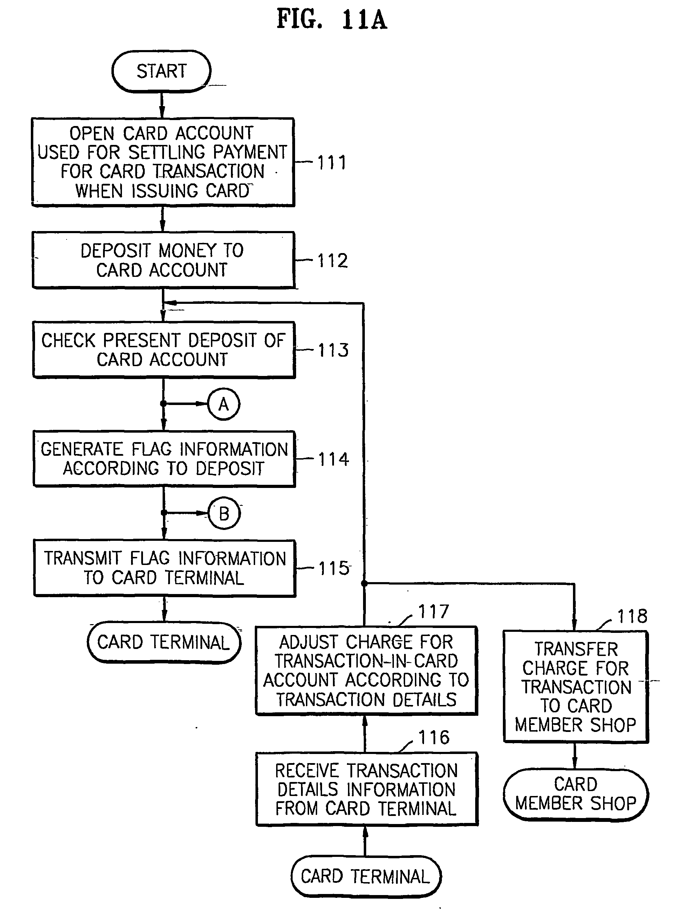

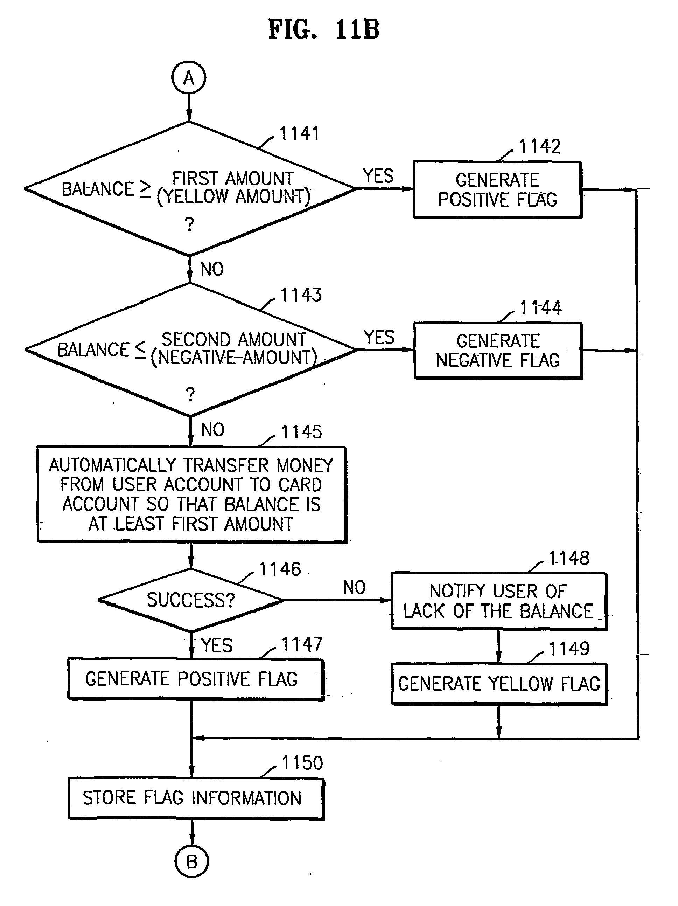

FIGS. 11A and 11B are flowcharts for explaining a procedure in which the main server 830 sets flag information about authority to use a card.

When a card is issued, a card account, which is used for settling payment for card transactions, is opened in step 111. Money is deposited to the card account in step 112. The main server 830 checks the present balance of the card account in step 113. Flag information is generated according the balance of the card account in step 114. The detailed procedure of generating flag information is illustrated in FIG. 11B.

If it is determined that the balance is at least a first amount (i.e., the yellow amount) in step 1141, a positive flag indicating that the card can be used is generated in step 1142. If it is determined that the balance is less than a second amount, which is set to be less than the first amount, in step 1143, a negative flag indicating that the card cannot be used is generated in step 1144.

Meanwhile, if it is determined that the balance is less than the first amount and larger than the second amount in step 1143, money is automatically transferred from a user account to the card account so that the balance of the card account is at least the first amount in step 1145. If it is determined that the transfer is done successfully in step 1146, a positive flag indicating that the card can be used is generated in step 1147. Otherwise, the user is notified of lack of the balance in step 1148, and a yellow flag is generated in step 1149. The flag information generated for the card is stored in a DB in step 1150. A positive flag indicating that an off-line transaction can take place is stored in a DB for storing data used for approving off-line transactions unless a negative flag is generated. The flag information is transmitted to a card terminal in step 115. It is not necessary to transmit yellow flag information to the card terminal because the yellow flag information is used for an on-line transaction. The yellow flag information is separately managed by the main server 870.

If transaction details information corresponding to the relevant card is received from a card terminal in step 116, and the charge for the transaction is adjusted in the card account in step 117. Then, the above-described procedure is performed, and the flag information is updated.

FIG. 9 is a block diagram of a card terminal according to an embodiment of the present invention. A card reader 92 reads card information such as a card number from a card 91. The card 91 may be either a non-contact type using radio frequency (RF) communication or a contact type in which information is storied in a magnetic strip. A fixed DB 951 and a variable DB 952 are used for authenticating the card 91 for an off-line transaction and are periodically or intermittently updated with the latest data of a main server. A transaction information DB 953 stores information about the details of a card transaction, which has taken place through the card terminal. The transaction details information is periodically or intermittently transmitted to the main server (or a management server). A storage unit for storing the fixed DB 951, the variable DB 952, and the transaction information DB 953 may be embodied as a memory pack 95 which can be removed from the card terminal. Data transmission between the card terminal and the management server (or the main server) may be performed through an online network or by separating the memory pack 95 from the card terminal and then installing it in the management server (or the main server).

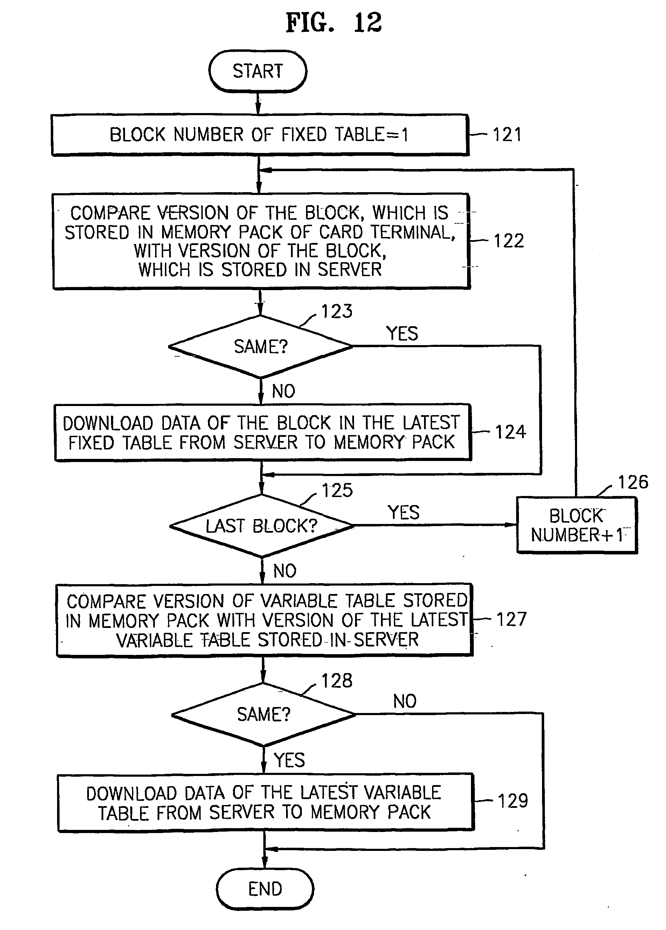

FIG. 12 is a flowchart of a method of updating data in a memory pack of a card terminal. Update of data stored in a variable DB and a transaction information DB, which are provided in the card terminal, can be performed through the management server 850 (which downloads the latest DB from the main server 830 in advance) shown in FIG. 8 or may be directly performed by the main server 830.

A server (a main server or a management server) and a card terminal are provided with a fixed table and a variable table. The memory area of the fixed table is divided into blocks, and flag information corresponding to individual card numbers is sequentially stored in each block according to the card numbers. In addition, the fixed table stores version information indicating the update history of block data. The variable table stores data regarding card numbers, for which flag information is changed, when there are changes in data regarding flag information on each card number stored in the fixed table and version information indicating the update history of the variable table. The card terminal needs to periodically or intermittently update data with data from the server so that data coherency between the server and the terminal can be maintained. Data update is performed as follows.

First, a procedure for updating the fixed table will be described. Update of the fixed table is performed starting from a block number 1 in step 121. Version information of the block of the fixed table, which is stored in a memory pack of a card terminal, is compared with version information of the block of the latest fixed table, which is stored in a server, in step 122. If it is determined that the version information in the card terminal is the same as that in the server in step 123, it is not necessary to download block data because the block data stored in the card terminal is the latest data. However, if it is determined that the two pieces of version information are not the same in step 123, the block data stored in the server is downloaded to the corresponding block of the fixed table stored in the memory pack in step 124. It is cheeked whether the current block is the last block in the fixed table in step 125. If the current block is not the last one, the block number is increased by 1, and update of block data is repeated.

After update of the fixed table is completed, the variable table is updated. Version information of the variable table stored in the card terminal is compared with version information of the variable table stored in the server in step 127. If it is determined that the two pieces of version information are not the same in step 128, data stored in the variable table in the card terminal is updated with data stored in the variable table in the server in step 129.

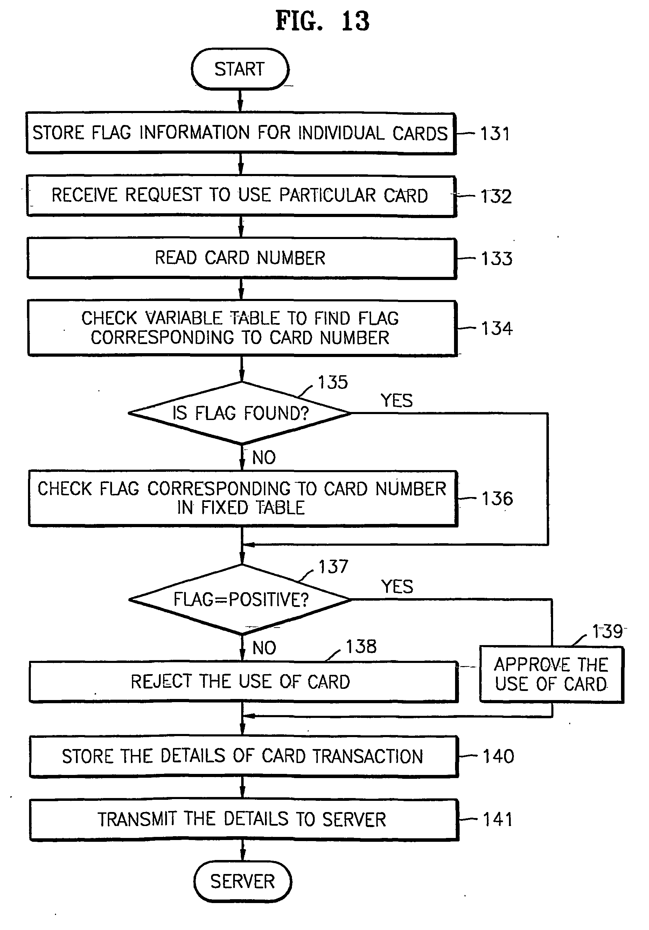

FIG. 13 is a flowchart of a procedure in which a card terminal approves the off-line use of a card. A memory pack installed in the card terminal is provided with a fixed table, in which a memory area is divided into blocks and flag information corresponding to card numbers is sequentially stored in each block according to the card numbers, and a variable table, which stores data regarding card numbers, for which flag information stored in the fixed table is changed, when there are changes in data regarding flag information stored in the fixed table, in step 131.

If a request to use a particular card is received in step 132, a card number is read from the card in step 133. The variable table is checked to find flag information corresponding to the card number in step 134. If the flag information is found in step 135, it is determined whether the card can be used according to the flag information in the variable table. Otherwise, flag information corresponding to the card number is checked in the fixed table in step 137 to determine whether the card can be used. That is, if the flag information is positive in step 137, the use of the card is approved in step 139. If the flag information is negative in step 137, the use of the card is rejected in step 138. Information regarding the details of card transaction is stored in step 140 and is then transmitted to a server when the card terminal communicates with the server in step 141.

Only the fixed table may be referred to when verifying a card according to circumstances. Since the fixed table has more amount of data than the variable table, referring to only the fixed table is effective when time necessary to interface a user card with a card terminal is very short. Alternatively, the fixed table may be first referred to, and then the variable table may be referred to.

The present invention can be realized as a code which is recorded on a computer readable recording medium and can be read by a computer. The computer readable recording medium may be any type on which data that can be read by a computer system can be recorded, for example, a ROM, a RAM, a CD-ROM, a magnetic tape, a floppy disc, or an optical data storage device. The present invention can also be realized as carrier waves (for example, a signal transmitted through Internet). Alternatively, computer readable recording media are distributed among computer systems connected through a network so that the present invention can be realized as a code which is stored in the recording media and can be read and executed in the computers.

### Industrial Applicability

As described above, according to a non-rechargeable e-money system and on- and off-line operating method of the present invention, when a client opens a cyber account on a network such as the Internet using mobile communication equipment and deposits a certain amount of money to the account using Internet banking, phone banking, or mobile communication equipment, the client is allowed to pay for transport fares such as bus and subway fares, charges for on-line electronic commerce, or charges for using off-line member stores through a point-of-sale terminal within the limit of money deposited to the account.

In addition, by managing clients using a positive flag and a yellow flag, a client can make on-line real time transactions and off-line batch transactions with a single card. Accordingly, network type cyber money and e-money, which is restrictively used only on an on-line, can be applied to off-line transactions.

## Claims

1. The method of maintaining data coherency between a server and a terminal, each of the server and the terminal including a fixed table, in which a memory area is divided into blocks, flag information corresponding to individual card numbers is sequentially stored in each block according to the card numbers, and version information indicating the data update history of each block is stored; and a variable table, which stores data regarding card numbers, for which flag information is charged, when there are changes in data regarding flag information stored in the fixed table, and version information indicating the data update history of the variable table, the method comprising:
comparing the version information of each block of a fixed table included in the terminal with the version information of each block of a fixed table included in the server;
when the version information of a certain block is not the same, updating data of the corresponding block of the fixed table in the terminal with data of the corresponding block of the fixed table in the server;
comparing the version information of a variable table included in the terminal with the version information of a variable table included in the server; and
when the version information is not the same, updating data stored in the variable table of the terminal with data stored in the variable table of the server.

2. A method of determining whether a card can be used, comprising:
providing a fixed table, in which a memory area is divided into blocks, and flag information corresponding to individual card numbers is stored, and a variable table, which stores data regarding card numbers, for which flag information is changed, when there are changes in data regarding flag information stored in the fixed table;
when there is a request to use a card, reading a card number from the card;
checking whether the variable table includes data regarding the card number;
if the variable table includes data regarding the card number, determining whether the card can be used according to flag information, which is stored in the variable table corresponding to the card number, and if the variable table does not include data regarding the card number, checking data in the fixed table; and
reading flag information corresponding to the card number from the fixed table and determining whether the card can be used according to the read flag information.

3. A card terminal comprising:
a fixed table database which stores flag information, which indicates whether each card can be used, corresponding to each card number;
a variable table database which stores data regarding card numbers, for which flag information is changed, when there are changes in data regarding flag information stored in the fixed table database;
a card reader which reads a card number from a given card when there is a request to use the card; and
a card controller which checks whether the variable table database includes data regarding the card number of a given card, determining whether the card can be used according to flag information in the variable table database when the variable table database includes the data, and checking data in the fixed table databases to read flag information corresponding to the card number from the fixed table database to determine whether the card can be used according to the read flag information when the variable table database does not include the data regarding the card number.

4. The card terminal of claim 3, wherein the fixed table database of which a memory area is divided into blocks further stores version information indicating data update history of each of the blocks;
the variable table database further stores version information indicating data update history thereof; and
when the fixed and variable table databases are updated with data stored in a server, the version information stored in the fixed and variable databases is compared with version information stored in the server, and only data, for which the server and the card terminal have different version information, is updated.

5. The card terminal of claim 3, wherein the flag information includes a positive flag indicating that an off-line transaction using the card corresponding to the card number can be made.

6. The card terminal of claim 3, wherein the fixed table database is sequentially allocated memory bits to the card numbers, and data indicating flag information corresponding to each card number is stored in a memory bit.

7. A method of allowing on- and off-line transactions to be made using a single card, the method comprising:
inquiring a card account, which is used for settling payment for transactions using the card, through a communication network to check the balance of the card account when there is a request to use the card on-line; and
rejecting the requested on line card transaction when a charge for the on-line card transaction is larger than the result of subtracting a certain amount of money, which is set for an off-line transaction, from the balance of the card account, and when the charge is not larger than the result of the subtraction, approving the requested on-line card transaction of subtracting the charge from the balance of the card account.

8. The method of claim 7, further comprising a step of generating a positive flag, which indicates that an off-line transaction is possible, when the balance of the card account is larger than a certain amount of money, which is set to be less than the certain amount of money set for an off-line transaction.

9. A computer readable recording medium on which a program for executing the method of any one of claims 1, 2, 7 and 8 is recorded.

10. A data table for both on-line and off-line card transactions, comprising:
a fixed table in which a memory area is divided into blocks, flag information corresponding to individual card numbers is sequentially stored in each block according to the card numbers, and version information indicating the data update history of each block is stored; and
a variable table which stores data regarding card numbers, for which flag information is changed, when there are changes in data regarding flag information stored in the fixed table, and version information indicating the data update history of the variable table;
wherein data stored in the fixed and variable tables is updated based on the version information of each block in the fixed table and the version information of the variable table, and the data stored in the fixed table is updated in units of blocks based on the data stored in the variable table.
